# EUROPEAN PATENT APPLICATION

(11) **EP 4 671 051 A1**
(43) Date of publication of application: **31.12.2025**
(21) Application number: 25180818.4
(22) Date of filing: 04.06.2025
(51) Int. Cl.: B60R 19/52

(54) **FRONT VISOR OF A FRONT ASSEMBLY OF A VEHICLE AND FRONT ASSEMBLY AND VEHICLE COMPRISING THE FRONT ASSEMBLY**

(30) Priority: 25.06.2024 DE 102024205926
(71) Applicant: Stellantis Auto SAS, 78300 Poissy (FR)
(72) Inventor: GEIPERT, TIM, 65428 Rüsselsheim am Main (DE); NEEB, TOBIAS, 65428 RÜSSELSHEIM AM MAIN (DE); ECKERT, HEIKO, 65428 RÜSSELSHEIM AM MAIN (DE)
(74) Representative: ESIP

(57) **Abstract**

A front visor (2) of a front assembly (1) of a vehicle is stated. The front visor (2) includes a housing (2c) and a visor lens (2b) with a front which in the mounted state of the front visor (2) is forward-facing and substantially formed flat. On the housing (2c) and/or on the visor lens (2b) at least one fastening element (10, 11, 12, 13, 14, 18, 19, 23) for directly fastening at least one front assembly element (3, 4) to the front visor (2) is formed, which, with respect to the front of the visor lens, is to be arranged substantially laterally. Further, a front assembly (1) and the vehicle comprising the front assembly (1) are stated.

## Description

The present disclosure generally relates to vehicle front assemblies. Specifically, the present disclosure relates to a front visor, a front assembly and a vehicle comprising the front assembly.

Front assemblies of vehicles are known. Further, front assemblies having a front visor or central visor or visor are known which can be arranged in a central front assembly region, in particular, between a left and a right headlamp. Because of the exposed position in a front assembly, precise positioning and installation of a front panel is particularly important, which, specifically because of restricted installation spaces for fastening elements, can constitute a technical challenge.

An object of the embodiments of the present disclosure is to provide a front visor, a front assembly and a vehicle which make possible to easily, safely and precisely install the front visor in the front assembly.

To achieve this object, a front visor of a front assembly of a vehicle is provided according to a first aspect. The front visor can be designed, in particular, as central visor for mounting in a central region of a front assembly of a vehicle, for example, between a left and a right headlamp on the vehicle front.

The front visor includes a housing and a visor lens or visor glass having, in the mounted state of the front visor, a forward-facing front substantially formed flat. In particular, the front visor can comprise a substantially forward-facing surface or visible surface visible from the outside.

On the visor lens, at least one fastening element for directly fastening at least one front assembly element, which with respect to the front of the visor lens is to be arranged substantially laterally, is formed on the front visor. The at least one fastening element can be formed, in particular, integrally with visor lens or visor glass. The at least one fastening element can be designed as a closure element, guide and/or adjusting element for directly fastening the visor lens to the at least one front assembly element.

Direct fastening or direct connecting in this context means that the fastening of the at least one front assembly element on the visor lens is accomplished by a direct mechanical connection between the visor lens and the at least one front assembly element, in particular, without special mounting elements.

In particular, the visor lens or the at least one fastening element of the visor lens and the at least one front assembly element or a corresponding counter-fastening element of the at least one front assembly element can be designed so that the visor lens and the at least one front assembly element can engage into one another in a mechanically connecting manner during the assembly of the front assembly.

Because of the direct fastening of the visor lens and of the at least one front assembly element, the front visor can be integrated in the front assembly in a particularly compact and space-saving manner. In particular, possible fastening elements such as mounting or fastening devices or holders can be omitted, as a result of which the entire construction can be simplified.

In particular, the number of the front assembly elements and number of the mechanical interfaces between the fastening elements of the front assembly can be reduced so that the front assembly can be cost-effectively provided. In addition, tolerance chains between the front visor and the at least one fastening element can be avoided, as a result of which a particularly high mounting precision of the front visor, in particular, with respect to neighbouring front assembly elements, can be achieved.

The at least one fastening element can include at least one fastening element formed on an edge, in particular, on an upper edge of the visor lens for directly fastening a front assembly element formed as so-called soft nose on the visor lens. In particular, the soft nose can be fastened on the upper edge of the visor lens directly or without interposition of further fastening elements, so that a gap between a visible surface of the soft nose and the visible surface of the visor lens can be reduced. In addition, the direct fastening or connection between the visor lens and the at least one front assembly element makes possible precisely maintaining the gap, which can serve both as a design feature and also as a mark of quality of the vehicle.

The at least one fastening element can include at least one fastening element formed at an edge, in particular, at a lower edge of the visor lens for directly fastening a front assembly element formed as radiator grille on the visor lens and/or on the housing of the front visor. In particular, in electric vehicles the front assembly can comprise a radiator grille imitation instead of a radiator grille or a decorative front element as replacement for the radiator grille. The term radiator grille is to mean in the following a radiator grille known from motor vehicles and also a decorative element replacing the radiator grille.

In particular, the radiator grille or the radiator grille imitation can be fastened to the lower edge of the front visor directly or without interposition of further fastening elements on the visor lens, so that a gap between a visible surface of the radiator grille and the visual surface of the visor lens can be reduced and precisely defined at the same time.

The front visor can include a central region, a first or left lateral wing region and a second or right lateral wing region formed opposite the first lateral region. In particular, the central or middle region of the front visor can be designed for representing a marque or logo of the vehicle. In some exemplary embodiments, the central region of the front visor comprises an illumination device, which can be formed as display, as lamp and/or as headlamp, in particular, so-called centre headlamp.

The first wing region and the second wing region can each include at least one upper fastening element for directly fastening a front assembly element formed as soft nose on the first wing region and on the second wing region of the front visor. By directly fastening the first wing region and the second wing region to the soft nose, a precisely defined gap between the soft nose and the front visor can be realised along the upper edge of the front visor.

The first wing region and the second wing region can each include at least one lower fastening element for directly fastening a front assembly element formed as radiator grille to the first wing region and to the second wing region of the front visor. By directly fastening the first wing region and the second wing region to the radiator grille or along the lower edge of the front visor, a precisely defined gap between the radiator grille and the front visor can be realised.

According to a second aspect, a front assembly of a vehicle is proposed. The front assembly includes at least one front visor according to the first aspect and at least one front assembly element arranged laterally with respect to the substantially flat front of the visor lens, wherein the at least one front assembly element is directly fastened to the front visor by means of the at least one fastening element of the front visor.

Because of the direct fastening of the visor lens and of the at least one front assembly element, the front visor can be mounted with an accurately defined gap between the visible surface of the front visor and a visible surface of the at least one front assembly element.

The front assembly can include a soft nose, wherein the soft nose can be directly fastened to the visor lens by means of at least one fastening element formed, in particular, at an upper edge of the visor lens. The direct fastening or connection between the visor lens and the soft nose makes possible precisely maintaining the gap between the visible surface of the front visor and of the visible surface of the soft nose.

The front assembly can include at least one front assembly element formed as radiator grille, which, by means of at least one fastening element formed in particular on a lower edge of the front visor, can be directly fastened to the front visor. The direct fastening or connection between the front visor and the radiator grille makes possible precisely maintaining the gap between the visible surface of the front visor and of the visible surface of the radiator grille.

A vehicle is provided according to a third aspect. The vehicle comprises a front assembly according to the second aspect. The vehicle is characterised by a highly precise gap embodiment between the front visor and the surrounding front assembly elements. Because of the reduced number of components, the vehicle can be additionally produced particularly cost-effectively.

The invention is now explained in more detail by way of the attached figures. Same reference numbers are used in the figures for parts that are the same or have the same effect.
- Fig. 1: shows a schematic front view of a front assembly of a vehicle according to an exemplary embodiment,
- Fig. 2: shows a schematic perspective view of a front visor of a front assembly of a vehicle according to an exemplary embodiment,
- Fig. 3: shows a schematic plan view of a right wing region of a front visor according to an exemplary embodiment,
- Fig. 4: shows a schematic longitudinal section of a front assembly according to an exemplary embodiment,
- Fig. 5: shows a schematic perspective part view of a connecting point between a soft nose and a front visor according to an exemplary embodiment,
- Fig. 6: shows a schematic longitudinal section of a front assembly according to an exemplary embodiment,
- Fig. 7: shows a further schematic longitudinal section of the front assembly according to fig six,
- Fig. 8: shows a perspective detail view of a fastening element of a front visor according to an exemplary embodiment,
- Fig. 9: shows a schematic bottom view of a right wing region of a front visor according to an exemplary embodiment,
- Fig. 10: shows a perspective detail view of a fastening element of a front visor according to an exemplary embodiment,
- Fig. 11: shows a schematic perspective longitudinal section through a connecting point between a radiator grille and a front visor according to an exemplary embodiment,
- Fig. 12: shows a further schematic longitudinal section through the connecting point according to Fig. 11,
- Fig. 13: shows a further perspective part view of a connecting point between a radiator grille and a front visor according to an exemplary embodiment, and
- Fig. 14: shows a schematic perspective view of a connecting point of a front visor with a guiding rib according to an exemplary embodiment.

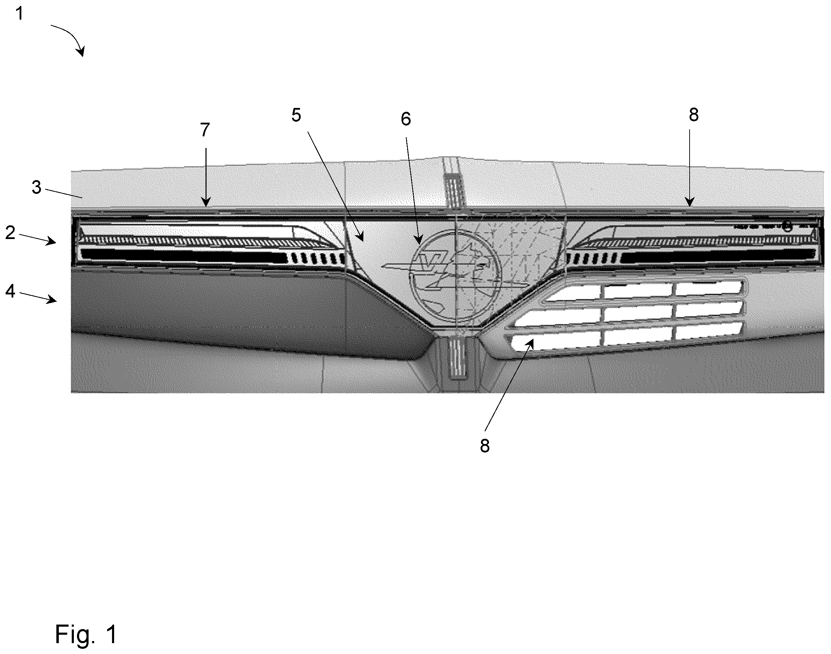

Fig. 1 shows a schematic front view of a front assembly of a vehicle according to an exemplary embodiment. In particular, Fig. 1 shows a front region of a vehicle with a front assembly 1, wherein the front assembly 1 includes a front visor 2, a soft nose 3 and a radiator grille 4.

The front visor 2 includes a visor lens with a substantially flat front surface or visible surface. The front visor 2 includes a middle region 5 with a logo 6, a right wing region 7 (in the front view on the left in the picture) and a left wing region 8 (in the front view on the right in the picture).

Depending on embodiment, the radiator grille 4 can be designed as a decorative covering element, in particular, in the case of battery-operated vehicles, or as a genuine radiator grille with ventilation openings 8, in particular, in the case of fuel-operated vehicles, as shown on the right in the picture.

The visor lens in the middle region 5 of the front visor 2 can, in particular, comprise one or more light elements with different functionalities. In particular, the logo can include at least one light element, so that the logo can appear as an illuminated pattern. In the front visor 2, further light functions can also be implemented. In particular, an exterior lamp can also be implemented in the middle region 5 and/or in at least one wing region 7, 8.

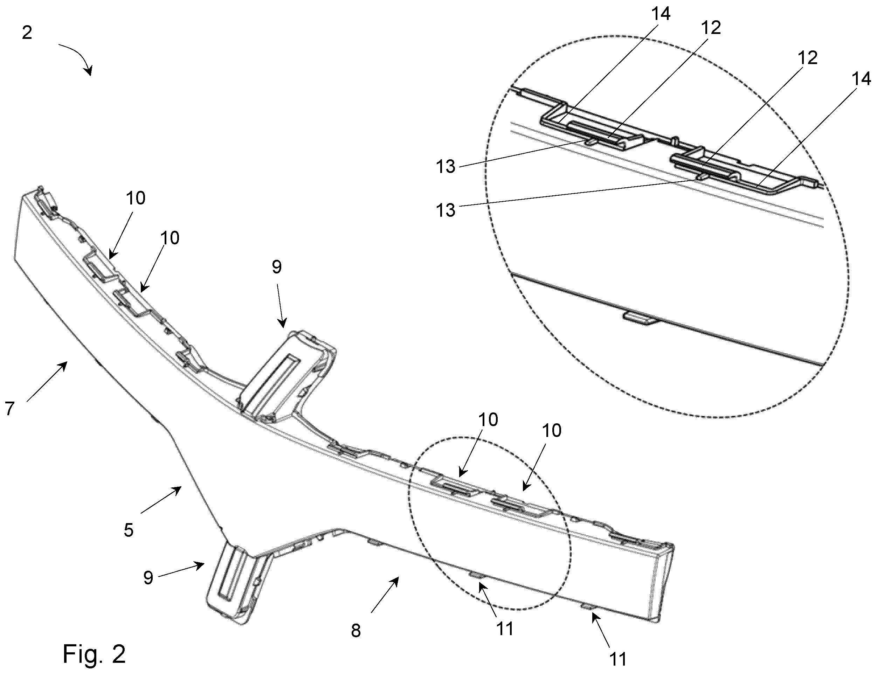

Fig. 2 shows a schematic perspective view of a front visor of a front assembly of a vehicle according to an exemplary embodiment. In particular, Fig. 2 shows a perspective overall view (at the bottom in the picture) and a perspective detail view (right top in the picture) of the front visor 2. In the perspective representation of Fig. 2, some fastening elements of the front visor 2 become clearly noticeable.

The front visor 2 comprises mounting elements 9 at a lower edge of the middle region 5 and fastening elements 10 and 11 along the wing regions 7 and 8.

In particular, the front visor 2 includes upper fastening elements 10, which are arranged on an upper edge of the first wing region 7 and of the second wing region 8. The upper fastening elements 10 are designed for being directly connected to the soft nose 3.

The front visor 2 also includes lower fastening elements 11, which are arranged on a lower edge of the first wing region 7 and of the second wing region 8 and are designed for being directly connected to the radiator grille 4.

The visor lens of the front visor 2 can comprise, in particular, a plastic, such as, for example, polycarbonate. In particular, the visor lens of the front visor 2 can be integrally formed with fastening elements, as a result of which the number of front assembly elements can be reduced. In some exemplary embodiments, the visor lens of the front visor 2 comprises a dirt and weather-resistant coating on the front, in particular, on the visible surface.

As is visible in the detail view (on the top right in the picture), the upper fastening elements 10 each include a gripping hook 12 for engaging in a corresponding counter-fastening element of the soft nose 3 and an adjusting rib 13 for the precise positioning of the upper fastening elements 10 with respect to corresponding counter-fastening elements of the soft nose 3. Next to the gripping hooks 12 there is a shoulder 14 each with a rear recess (not visible in Fig. 2), so that an engagement hook or locking rib formed on a counter-fastening element of the soft nose 3 can engage in the clip or hook element formed by the shoulder 14.

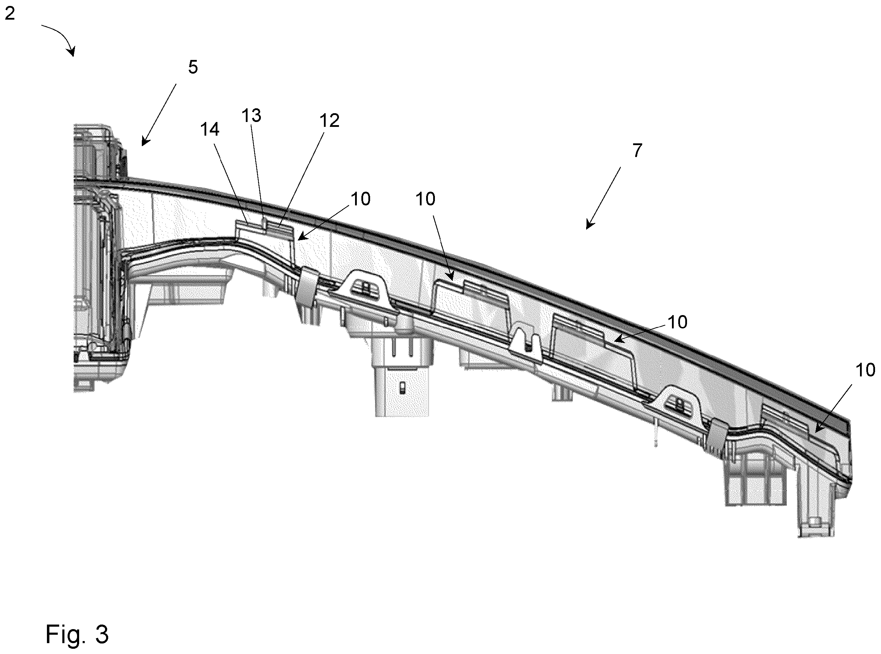

Fig. 3 shows a schematic plan view of a right wing region of a front visor according to an exemplary embodiment. In particular, the right wing region 7 and a part of the middle region 5 of the front visor 2 are visible in the plan view in Fig. 3. As is visible by way of the plan view of Fig. 3, the front visor 2 comprises multiple upper fastening elements 10 distributed over the right wing region 7.

In the shown exemplary embodiment, the right wing region comprises altogether four upper fastening elements 10 each with a gripping hook 12, with an adjusting rib 13 and with a shoulder 14. The left wing region 8 (not visible in Fig. 3) is formed substantially symmetrically to the right wing region 7 and likewise comprises four upper fastening elements 10.

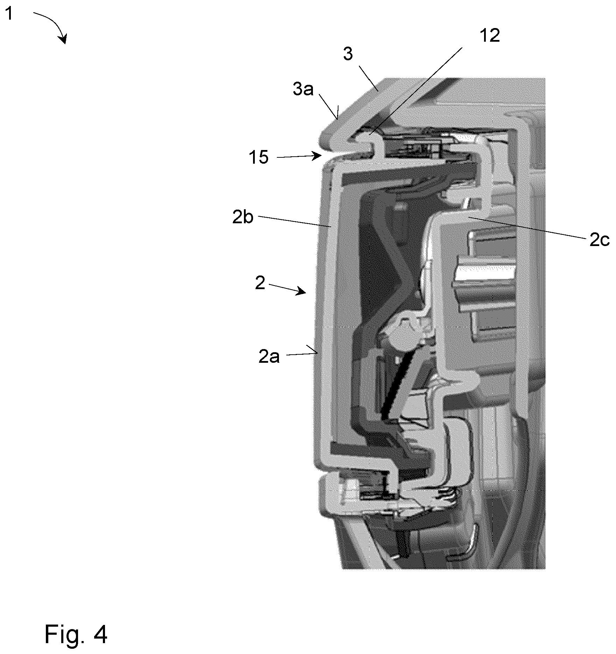

Fig. 4 shows a schematic longitudinal section of a front assembly according to an exemplary embodiment. In particular, Fig. 4 shows a perpendicular longitudinal section of the front assembly 1 through a connecting point between the soft nose 3 and the visor lens 2b of the front visor 2. Further, the housing 2c of the front visor 2 is visible in the longitudinal section of Fig. 4. As is evident by way of the longitudinal section, a gripping hook 12 of the visor lens 2b of the front visor 2 engages behind an inner edge of the soft nose 3, so that a direct mechanical connection between the visor lens 2b of the front visor 2 and of the soft nose 3 is created. Thus, a gap 15 that is visible from the outside, forms between a visible surface 2a of the front visor 2 and a visible surface 3a of the soft nose 3.

Because of the direct connection of the visor lens 2b of the front visor 2 to the soft nose 3, the gap 15 can be practically embodied as small as possible and precisely maintained. Thus, a narrow gap with a precisely maintained gap width can be realised, which by the beholders can be perceived to be not only visually attractive but also as a mark of quality.

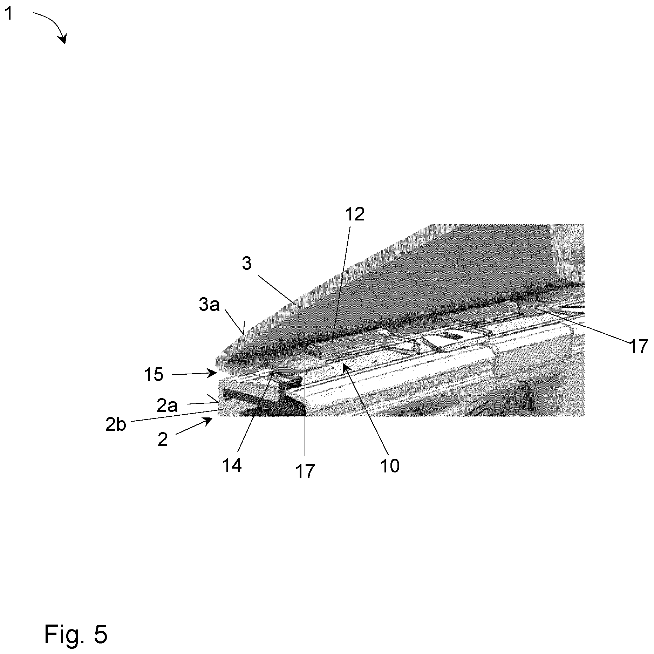

Fig. 5 shows a schematic perspective part view of a connecting point between a soft nose and a front visor according to an exemplary embodiment. In particular, Fig. 5 shows an inside view of a connecting point between the front visor 2 and the soft nose 3. In the view of Fig. 5, an inner edge of the soft nose 3 with an engagement hook 17 or locking rib can be seen in particular. The engagement hook 17 engages behind the shoulder 14 so that the soft nose 3 can be secured in its position with respect to the front visor 2. In addition, the engagement hook 17 can exert a perpendicular pressure force on the shoulder 14 or on the upper edge of the visor lens 2b, as a result of which the connecting point can be stabilised against vibrations. By suitably dimensioning the upper fastening elements 10, in particular the shoulder 14, the width of the gap 15 between the visible surfaces 2a, 3a of the front visor 2 and the soft nose 3 can be adjusted.

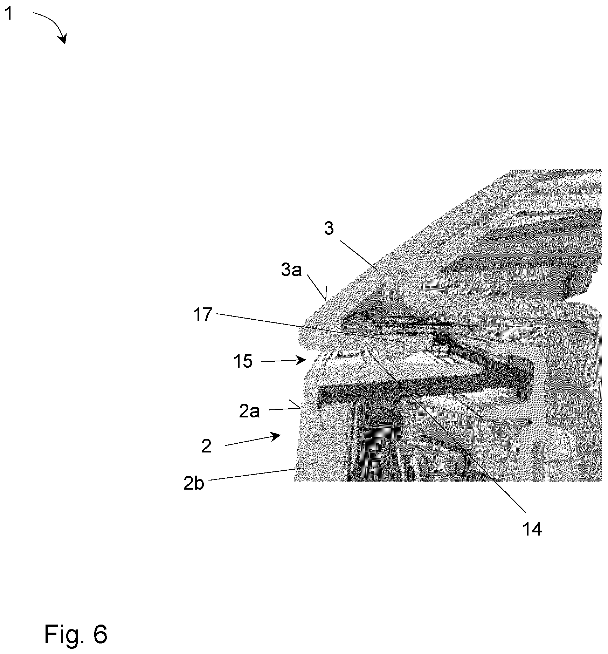

Fig. 6 shows a schematic longitudinal section of a front assembly according to an exemplary embodiment. In the longitudinal section of Fig. 6, the connecting point of the engagement hook 17 of the soft nose 3 and of the shoulder 14 of the fastening element 10 of the front visor 2 is clearly visible in particular.

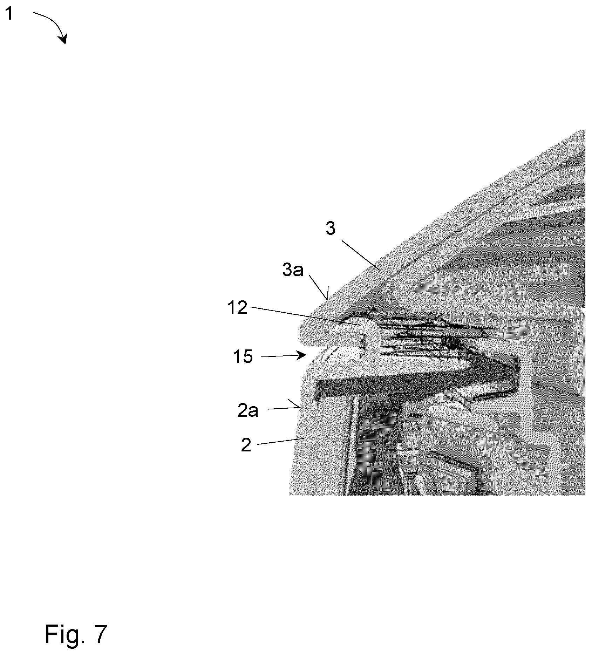

Fig. 7 shows a further schematic longitudinal section of the front assembly according to Fig. 6. In particular, Fig. 7 shows a longitudinal section of the front assembly 1 in a section plane that is parallel to the section plane of Fig. 6. In the section plane of Fig. 7, the engagement of the gripping hook 12 of the fastening element 10 of the front visor 2 behind an inner edge of the soft nose 3 is particularly clearly visible.

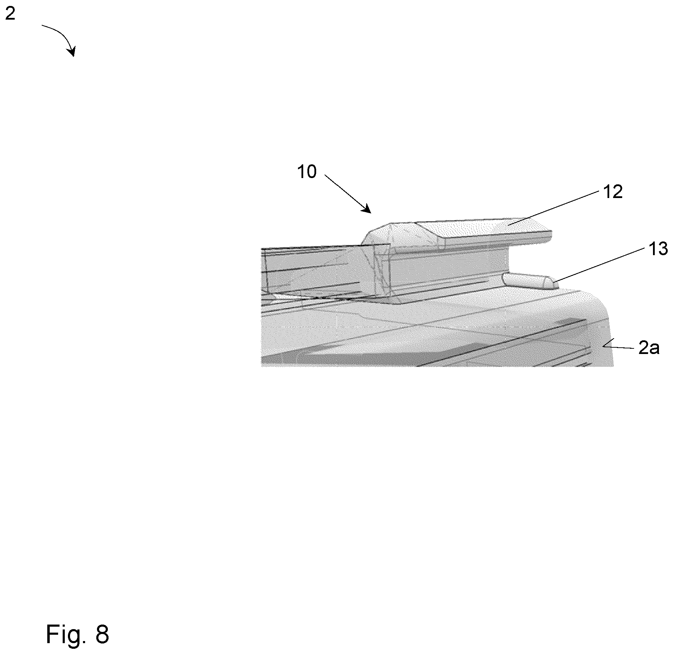

Fig. 8 shows a perspective detail view of a fastening element of a front visor according to an exemplary embodiment. In particular, Fig. 8 shows a perspective front view of the upper fastening element 10 of the front visor 2, wherein the gripping hook 12 and the adjusting rib 13 of the fastening element 10 are particularly clearly visible.

As is noticeable by way of Fig. 8, the gripping hook 12 has a certain height and offers space for receiving an inner edge of the soft nose 3 and a free space for the gap 15, see Fig. 7, top. The height of the gripping hook can be adapted, in particular, to the wall thickness of the soft nose, so that the inner edge of the soft nose 3 can be substantially received with a precisely defined gap 15 in the gripping hook. The engagement hook 17 (see Fig. 6, top) can exert a perpendicular force on the visor length B, so that the gap in between can also be stabilised. Before the engagement of the engagement hook 17 behind the shoulder 14 of the fastening element 10, the soft nose 3 can be oriented or correctly positioned with respect to the front visor 2 by means of the adjusting rib 13.

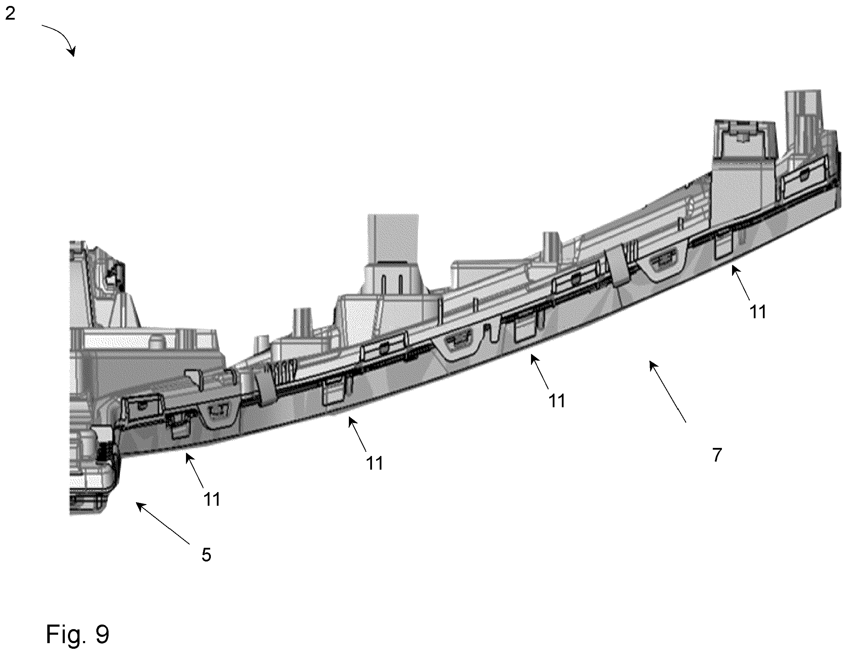

Fig. 9 shows a schematic bottom view of a right wing region of a front visor according to an exemplary embodiment. In particular, the right wing region 7 and a part of the middle region 5 of the front visor 2 are visible in bottom view in Fig. 9. As is visible by way of the bottom view of Fig. 9, the front visor 2 comprises multiple bottom fastening elements 11 distributed over the right wing region 7.

In the shown exemplary embodiment, the right wing region 7 comprises altogether four bottom fastening elements 11. The left wing region 8 (not visible in Fig. 3) of the front visor 2 is designed substantially symmetrically to the right wing region 7 and likewise comprises four bottom fastening elements 11.

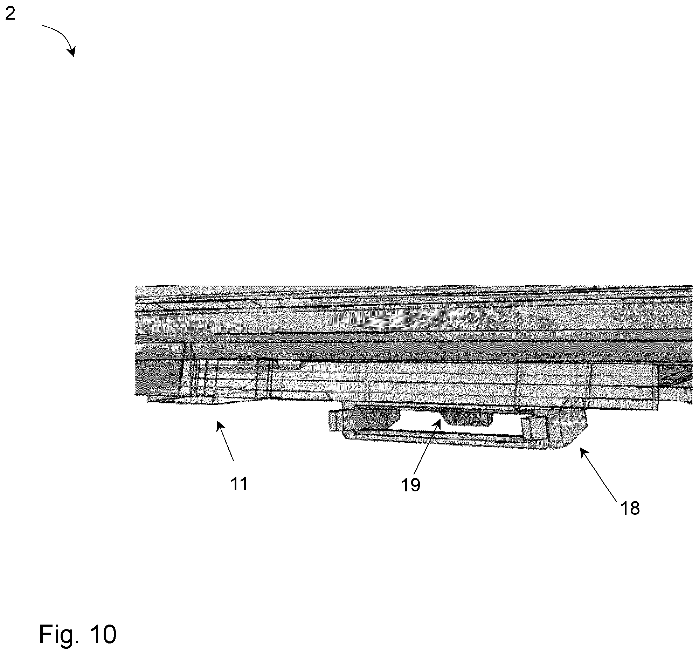

Fig. 10 shows a perspective detail view of a fastening element of a front visor according to an exemplary embodiment. In particular, Fig. 10 shows a perspective front view of a bottom region of the front visor 2 with a bottom fastening element 11, with a guiding frame 18 and with an engagement lug 19. The bottom fastening element 11 is designed as guiding or holding element for guiding or holding an upper edge region of a radiator grille or a decorative radiator grille imitation. The guiding frame 18 is designed for receiving a fastening tap of the radiator grille with an engagement hook for engaging behind the engagement lug 19.

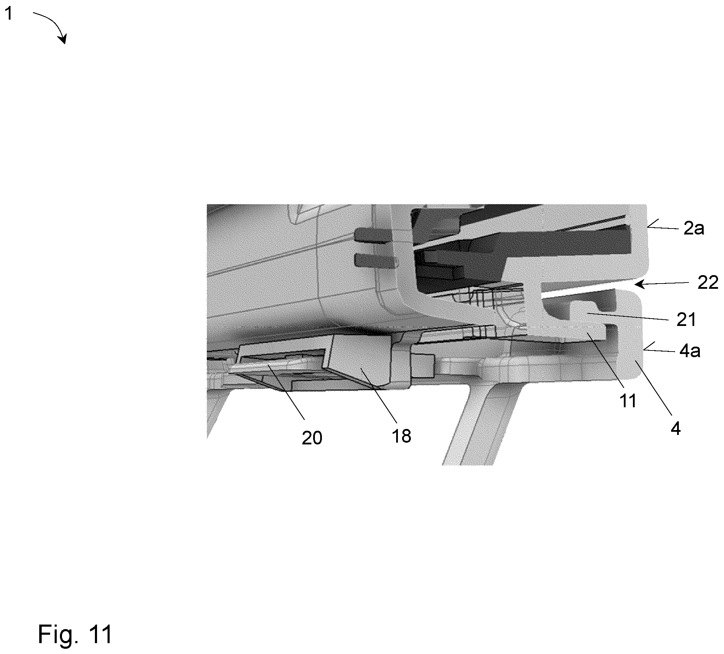

Fig. 11 shows a schematic perspective longitudinal section through a connecting point between a radiator grille and a front visor according to an exemplary embodiment. In particular, Fig. 11 shows a perspective rear view of the connecting point, wherein in the guiding frame 18 of the front visor 2 a fastening tap 20 of the radiator grille with an engagement hook (not visible) has been received.

The bottom fastening element 11 has been pushed in under a retaining lug 21 of the radiator grille 4. Between the visible surface 2a of the front visor 2 and a visible surface 4a of the radiator grille 4, a gap 22 is located, wherein the width of the gap 22 can be defined and precisely maintained by dimensioning the lower fastening element 11 and the guiding frame 18 of the front visor 2 and the retaining lug 21 of the radiator grille 4. The fastening tap 20 of the radiator grille 4, similar to the engagement hook 17 of the soft nose 3, exerts a perpendicular pressure force on the visor lens 2b, so that the gap 22 between the visible surfaces 2a, 4a of the front visor 2 and of the radiator grille 4 can be stabilised.

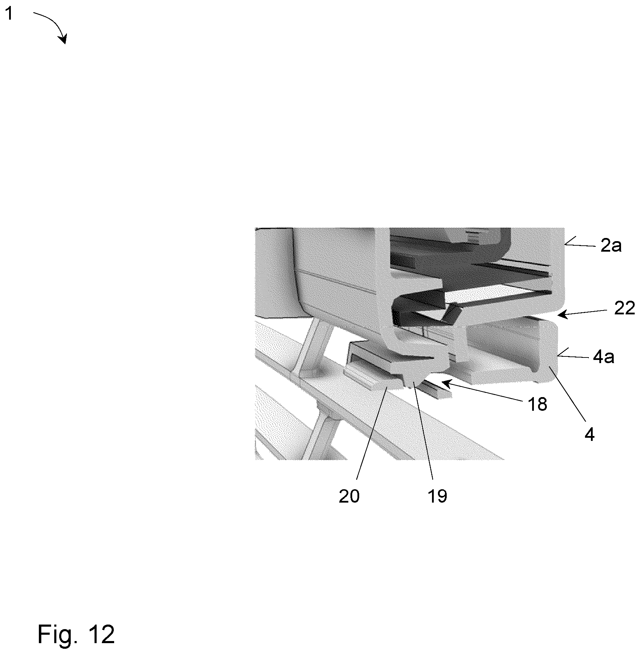

Fig. 12 shows a further schematic longitudinal section through the connecting point according to Fig. 11. In particular, Fig. 12 shows a longitudinal section of the front assembly 1 in a section plane that is parallel to the section plane of Fig. 11, which runs through the guiding frame 18. In the section view of Fig. 12, the inter-engagement of the engagement lug 19 of the radiator grille 4 and of the fastening tap 20 of the front visor 2 is particularly clearly visible.

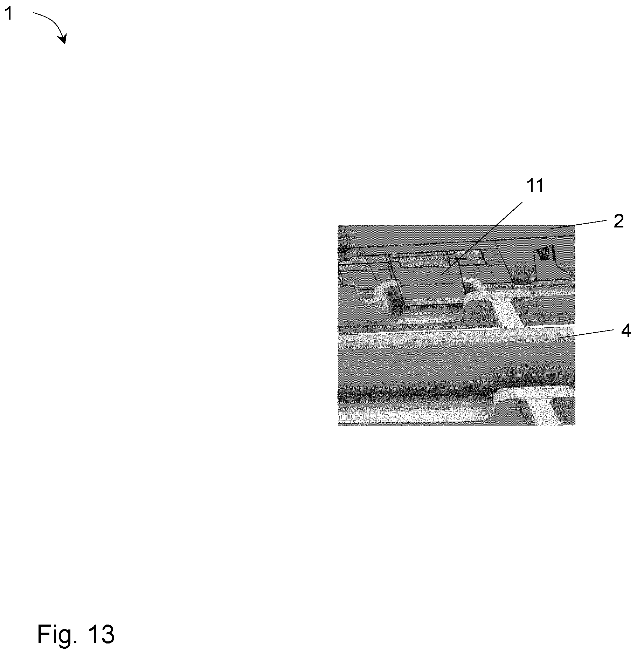

Fig. 13 shows a further perspective part view of a connecting point between a radiator grille and a front visor according to an exemplary embodiment. In particular, the connection between a bottom fastening element 11 of the front visor 2 and an upper edge region of the radiator grille 4 designed as holding frame is visible in Fig. 3.

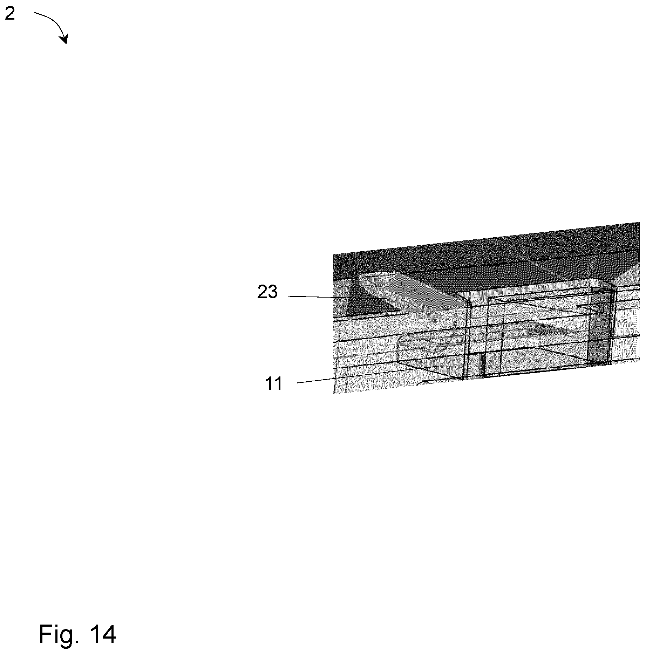

Fig. 14 shows a schematic perspective view of a connecting point of a front visor with an adjusting rib according to an exemplary embodiment. In particular, Fig. 14 shows a bottom region of the front visor 2 with a bottom fastening element 11 and with an adjusting rib 23. The adjusting rib 23 can be designed in particular for positioning the radiator grille 4 and the front visor 2 precisely relative to one another.

Because of the direct connection between the front visor 2 to the radiator grille 4 and to the soft nose 3, the front assembly 1 introduced here, is of a very robust and compact design. The front visor 2, the radiator grille 4 and/or the soft nose 3 can be formed integrally, for example, by means of an injection moulding method, as a result of which the number of the components can be reduced and the mounting of the front assembly 1 be simplified.

The direct connection between the front visor and the neighbouring front assembly elements additionally makes possible avoiding tolerance chains, so that the gap widths between the front visor and the surrounding elements can be precisely maintained.

By integrating fastening elements, guiding and adjusting elements in the front visor, critical package requirements can be fulfilled and best possible tolerances achieved.

By means of the solution proposed here, all demands in terms of robustness of light elements of front assembly can be additionally satisfied. For assembling front assemblies, very simple fastening elements in terms of tools can be used for the surrounding components, as a result of which the overall installation space can be minimised.

By adjusting front assembly elements directly via the front visor or central visor lens, an optimal gap embodiment round about the front visor can be achieved, since no tolerance chain is created and additional parts can be saved. The interface between the front visor and surrounding front assembly elements is realised by fastening or locking elements which are integrated in the front visor, in particular, in the visor lens and/or in the visor housing. In addition, retaining elements are integrated directly in the visor glass, which ensure the retaining force in the vertical direction and can be used for the gap adjustment in the horizontal and/or vertical direction.

Thus, a front assembly for a vehicle is provided which makes possible a particularly compact and robust mounting of the visor and offers increased freedom of design for the vehicle designers. The interfaces present in the front assembly, in particular, between the visor and the adjoining components of the front assembly, can be realised in a limited insulation space and with high precision, in particular, without tolerance chains. In addition, the front assembly comprises improved gap conditions and altogether requires fewer components, as a result of which the front assembly can be realised particularly cost-effectively.

The interfaces between the front visor and the surrounding components can be substantially simplified which can lead to further cost savings.

Although at least one exemplary embodiment has been shown in the preceding description, various changes and modifications can be carried out. The mentioned embodiments are merely examples and not provided for restricting the range of validity, the applicability or the configuration of the present disclosure in any way. The preceding description rather provides the person skilled in the art with a plan for implementing at least one exemplary embodiment, wherein numerous changes in the function and the arrangement of elements described in an exemplary embodiment can be made without leaving the scope of protection of the attached claims and their legal equivalents. Apart from this, multiple modules or multiple products can also be connected with one another according to the principles described here in order to obtain further functions.

### List of reference numbers

- 1: Front assembly
- 2: Front visor
- 2a: Visible surface
- 2b: Visor lens
- 2c: Housing
- 3: Soft nose
- 3a: Visible surface
- 4: Radiator grille
- 4a: Visible surface
- 5: Middle region
- 6: Logo
- 7: Right wing region
- 8: Left wing region
- 9: Mounting element
- 10: Upper light element
- 11: Lower light element
- 12: Gripping hook
- 13: Adjusting rib
- 14: Shoulder
- 15: Gap

- 17: Engagement hook
- 18: Guiding frame
- 19: Engagement lug
- 20: Fastening tap
- 21: Retaining lug
- 22: Gap
- 23: Adjusting rib

## Claims

1. A front visor of a front assembly (1) of a vehicle,
wherein the front visor (2) includes a housing (2c) and a visor lens (2b) with a, in the mounted state of the front visor (2), front-facing front substantially formed flat, and wherein on the housing (2c) and/or on the visor lens (2b) at least one fastening element (10, 11, 12, 13, 14, 18, 19, 23) for directly fastening at least one front assembly element (3, 4) to be arranged substantially laterally with respect to the front of the visor lens is formed on the front visor (2).

2. The front visor according to claim 1,
wherein the at least one fastening element (10, 11, 12, 13, 14, 18, 19, 23) includes at least one fastening element (10, 11, 12, 13) formed on an edge, in particular, on an upper edge of the visor lens (2b) for directly fastening a front assembly element (3) formed as soft nose to the visor lens (2b).

3. The front visor according to claim 1 or 2,
wherein the at least one fastening element (10, 11, 12, 13, 14, 18, 19, 23) includes at least one fastening element (11, 23) formed on an edge, in particular, on a bottom edge of the visor lens for directly fastening a front assembly element (4) formed as radiator grille to the visor lens (2b).

4. The front visor according to any one of the preceding claims,
wherein the front visor includes a central region (5), a first lateral wing region (7) and a second lateral wing region (8) formed opposite the first lateral region.

5. The front visor according to claim 4,
wherein the first wing region (7) and the second wing region (8) each includes at least one upper fastening element (10, 11, 12, 13) for directly fastening a front assembly element (3) formed as soft nose to the first wing region (7) and to the second wing region (8) of the front visor (2).

6. The front visor according to claim 4 or 5,
wherein the first wing region (7) and the second wing region (8) each includes at least one bottom fastening element (11, 18, 19, 23) for directly fastening a front assembly element (4) formed as radiator grille to the first wing region (7) and to the second wing region (8) of the front visor.

7. A front assembly (1) of a vehicle,
wherein the front assembly (1) includes at least one front visor (2) according to any one of the preceding claims and at least one front assembly element (3, 4) which with respect to the substantially flat front of the visor lens (2b) is arranged laterally, and wherein the at least one front assembly element (3, 4) is fastened to the front visor (2) by means of the at least one fastening element (10, 11, 12, 13, 14, 18, 19, 23) of the front visor.

8. The front assembly according to claim 7,
wherein the front assembly (1) includes a soft nose (3),
and wherein the soft nose (3) is directly fastened to the visor lens (2b) by means of at least one fastening element (10, 23, 13, 14) formed, in particular, on an upper edge of the visor lens (2b).

9. The front assembly according to claim 7 or 8,
wherein the front assembly (1) includes at least one front assembly element designed as radiator grille (4), which is directly fastened to the front visor (2) by means of at least one fastening element (18, 19, 23) formed, in particular, on a lower edge of the front visor (2).

10. A vehicle,
wherein the vehicle comprises a front assembly (1) according to any one of the claims 7 to 9.
